Europäisches Patentamt

European Patent Office

Office européen des brevets

(11) Publication number: **0 302 207**
**A2**

## (12) EUROPEAN PATENT APPLICATION

(21) Application number: 88109747.1

(22) Date of filing: 18.06.88

(51) Int. Cl.⁴: **B29C 33/68** , **B32B 33/00**

(30) Priority: 30.06.87 US 67830

(43) Date of publication of application:
08.02.89 Bulletin 89/06

(84) Designated Contracting States:
DE FR GB

(71) Applicant: **JAMES RIVER CORPORATION**
**Tredegar Street**
**Richmond VA 23217(US)**

(72) Inventor: **Patterson, Robert**
**1309 Nicolet Boulevard**
**Neenah, Wisconsin 54956(US)**
Inventor: **Papez, Stephen M.**
**1135 Moreland No. 2**
**Oshkosh, Wisconsin 54901(US)**

(74) Representative: **Schupfner, Gerhard et al**
**Patentanwälte Dipl.-Ing. Hans-Jürgen Müller**
**Dipl.-Chem.Dr.phil.nat. Gerhard Schupfner**
**Dipl.-Ing. Hans-Peter Gauger**
**Karlstrasse 5 D-2110 Buchholz in der**
**Nordheide(DE)**

(54) Undercoated silicone release sheet.

(57) Release sheets formed on paper, nonwoven fabric, polymeric film, or extrusion-coated paper substrates are disclosed. The release sheets have a nonpolar hydrocarbon-like undercoating of low elastic modulus interposed between the substrate and a silicone release coating.

EP 0 302 207 A2

## UNDERCOATED SILICONE RELEASE SHEET

### Field of the Invention

The present invention relates to release sheets. Release sheets are temporary members used to facilitate the handling of adhesive-coated and other tacking articles.

Various types of release sheets are used with adhesive products such as adhesive tapes, bumper stickers, labels, sealants, caulks, mastics, medical devices, solar screen films, rubber separator sheets, etc. The release coating should be able to adhere sufficiently to the support substrate to prevent transfer of the release coating to the adhesive with resultant detackification of the adhesive. The basic construction of the release sheet used for such purposes consists of a support substrate having a release layer formed on at least one side thereof, often with an undercoating layer interposed between the support substrate and the release layer.

### Description of the Related Art

Release sheets have been made using a wide variety of substrates; substrates useful according to the present invention are discussed below in the Description of the Preferred Embodiments. Release coatings also fall into diverse categories; fluorocarbons, chrome complexes, fatty acid amides, long chain hydrocarbon-containing polymers, and various silicone polymers have been found to be suitable for this purpose. Undercoats, however, have not been so widely investigated. Among the undercoating layers in use today are polyethylene extrudates and clay-based pigments used in conjunction with water-soluble polymers such as poly(vinyl alcohol). Also used are starch size press coatings with sodium alginate or carboxymethylcellulose as thickeners.

U.S. Patent No. 4,609,589 is directed to release sheet undercoatings based upon mixtures of certain acrylic resin emulsion compositions. In their Comparative Examples 41-49, the patentees disclose release sheets comprising aluminum foil/paper substrates in which the silicone release layer is undercoated with polyethylene or a 100:20 mixture of clay with a styrene-butadiene rubber latex. That disclosure is in the context of demonstrating the inferiority of such hydrocarbon-type undercoatings.

### Summary of the Invention

It is one object of this invention to reduce the total amount of silicone necessary to manufacture high quality release sheets.

It is another object of this invention to provide high performance, high quality release liners with the desired release level at the lowest possible silicone coating weight.

It is a further object of this invention to provide release sheets with enhanced aged-release characteristics.

These and other ends can be achieved by practicing the present invention, which relates to a release sheet that comprises a support substrate having a release layer formed on at least one side thereof with an undercoating layer interposed between the support substrate and the release layer, said undercoating layer consisting essentially of nonpolar materials characterized by low tensile strength, by low glass transition temperature ("Tg"), and by low modulus of elasticity.

### Description of the Preferred Embodiments

Examples of the support substrate in the release sheet according to the present invention include cellulosic and/or polymeric materials such as paper bases, nonwoven fabrics, polymeric films, and extrusion-coated papers.

2

Suitable paper bases are made of bleached, semibleached, and natural kraft paper, supercalendered kraft, parchment, glassine, machine-finished paper, machine-glazed paper, fine paper, and board paper having basis weights of 18-400 g/m² and thicknesses of 30-500 microns.

Suitable nonwoven fabrics have basis weights of 10-150 g/m² and thicknesses of 30-400 microns and are produced by the dry method, wet method, or direct method.

Suitable polymeric films have thicknesses in the range of 10 to 800 microns. Illustrative examples include films of polyolefins, e.g., polyethylene, polypropylene, and polybutylene. Polyester films, e.g. polyethylene terephthalate films, polyvinyl chloride films, polyvinylidene chloride films, polyvinylidene fluoride films, polysulfone films, polyimide films, high impact polystyrene films, and films of various nylon polymers may also be used as substrates. Coextruded films consisting of two or more layers of one or more of the polymers mentioned may be used.

Paper extrusion-coated with polyolefins including low density polyethylene, high density polyethylene, linear low density polyethylene, polypropylene, and the like also provide a usable base for precoating.

The release agent used in the present invention is not limited to any particular type. Known release agents based upon silicone polymers are currently preferred. The disclosed technology works well with thermal cure solvent or solvent-free silicone systems catalyzed by tin, platinum, rhodium, or other suitable catalysts and with electron beam or other radiation cure silicones.

The deposition of the release coating may be effected by conventional methods. It may be applied, for instance neat or from a solvent, using such techniques as offset gravure, direct gravure, or multiple roll. Depending upon the end use, the release layer and undercoating system may be applied to one or to both sides of the substrate. When both sides of the substrate are coated, different systems may be used on each side in order to provide a differential release liner.

Materials that can be used to make good undercoatings according to the present invention are hydrophobic in nature and are those characterized by low tensile strength, by low glass transition temperature, and by low modulus of elasticity. In particular, those materials are preferred which have a polar component of surface energy less than 5 dynes per centimeter and an elastic modulus less than 10,000 pounds per square inch. Materials will generally be selected such that their glass transition temperature will be below the end use temperature of the release system. Examples of materials that may be used include polybutadiene, polyisoprene, styrene butadiene rubber, styrene isoprene rubber, $C_{14}$-$C_{16}$ alkyl ketene dimers, block copolymers such as styrene-butadiene-styrene, styrene-isoprene-stryene, styrene-ethylene-butylene-styrene, styrene-ethylene-propylene-styrene, and the like, and blends of polybutadiene and diacrylate with $C_{14}$-$C_{15}$ diacrylates. Other hydrocarbons and hydrocarbon-like materials with similar physical and chemical properties also may be used. Precoats can be applied neat or from a solvent.

The release sheets of the present invention are normally used to mask adhesive zones of adhesive-coated articles by being themselves adhered to said zones. They are generally removed from the articles just prior to use, exposing the still tacky adhesive zone.


## Examples


Substrates were precoated with hydrocarbon or hydrocarbon-like materials according to the present invention or with other materials for comparison or were left un-undercoated as controls. Silicone release coatings were applied to the precoated substrates, using a 360 Q Pamarco offset proofer, at levels of 25%, 50%, and 75% solids so that a range of coating weights could be achieved. The coatings were then cured. The siliconized bases were tested in accordance with TAPPI um-502. Zonas brand adhesive tape (from Johnson & Johnson) was substituted for Johnson & Johnson Red Cross brand tape and applied to cover the silicone release coatings. The taped samples were aged at 70°C and 1/4 psig for various periods of time up to 28 days. The tapes were then stripped from the release liner at a rate of 12 inches per minute using an Instron tensile properties analyzer. The force required to remove the tape, in grams per inch of width, is reported in the tables that follow.

In the tables that follow, the following materials are used. The modulus numbers are in pounds per square inch ("psi") and were measured at a strain rate of 50% per minute on an Instron tensile properties analyzer.

3

DESIGNATION:                    DESCRIPTION:

Substrates

    Plainwell            Supercalendered kraft

    J. Mass SLF          Supercalendered kraft

    PD-192               Double-coated supercalendered kraft

Undercoat

    SBS                  Styrene-butadiene-styrene
                         MODULUS = 2412

    C5000:C2000          Blend of polybutadiene diacrylate
                         with $C_{14}$-$C_{15}$ diacrylates (2:1 blend)
                         MODULUS = 479

    C5000                Polybutadiene diacrylate
                         MODULUS = 270 (calculated)

    NRL                  Natural rubber latex (polyisoprene)
                         MODULUS = 133

    PBD                  Polybutadiene
                         MODULUS = 57

Release Coats

    RC450                Electron-beam curable silicone
                         acrylate

    7610/7611            Platinum-catalyzed-addition curable
                         silicone

Table I

| Substrate: | Plainwell Supercalendered Kraft |
|---|---|
| Release Coat: | RC450 Silicone Acrylate |

| | | ------------Days------------ | | | | |
|---|---|---|---|---|---|---|
| | | 1 | 7 | 14 | 21 | 28 |
| **Undercoat:** | | | | | | |
| Polyvinyl-acetate MODULUS= 256,000 | 25% | 201 | 236 | 240 | 292 | 337 |
| | 50% | 106 | 214 | 229 | 199 | 278 |
| | 75% | 54 | 105 | 136 | 140 | 151 |
| Acrylated-polyurethane MODULUS= | 25% | 42 | 96 | 132 | 145 | 169 |
| | 50% | 23 | 64 | 72 | 113 | 128 |
| | 75% | 20 | 43 | 60 | 79 | 89 |
| C5000:C2000 | 25% | 13 | 20 | 19 | 24 | 33 |
| | 50% | 11 | 17 | 15 | 23 | 24 |
| | 75% | 11 | 16 | 17 | 22 | 23 |

Table II

| Substrate: | J. Mass SLF Supercalendered Kraft |
|---|---|
| Release Coat: | RC450 Silicone Acrylate |

| | | ------------Days------------ | | | | |
|---|---|---|---|---|---|---|
| | | 1 | 7 | 14 | 21 | 28 |
| **Undercoat:** | | | | | | |
| Uncoated | 25% | 109 | 193 | 177 | 212 | 224 |
| | 50% | 42 | 61 | 108 | 133 | 126 |
| | 75% | 17 | 25 | 45 | 54 | 64 |
| C5000:C2000 | 25% | 16 | 24 | 21 | 29 | 35 |
| | 50% | 14 | 20 | 24 | 30 | 36 |
| | 75% | 12 | 16 | 21 | 21 | 23 |

## Table III

| Substrate: | PD-192 Double-Coated Supercalendered Kraft |
| --- | --- |
| Release Coat: | RC450 Silicone Polyacrylate |

| | | Days | | | | |
| --- | --- | --- | --- | --- | --- | --- |
| | | 1 | 7 | 14 | 21 | 28 |
| Undercoat: | | | | | | |
| Uncoated | 25% | 104 | 197 | 244 | 247 | 305 |
| | 50% | 39 | 87 | 119 | 151 | 182 |
| | 75% | 21 | 34 | 52 | 64 | 75 |
| C5000:C2000 | 25% | 14 | 23 | 26 | 31 | 39 |
| | 50% | 13 | 18 | 22 | 26 | 26 |
| | 75% | 12 | 12 | 21 | 20 | 25 |

## Table IV

| Substrate: | Plainwell Supercalendered Kraft |
| --- | --- |
| Release Coat: | 7610/7611 Platinum-catalyzed-addition curable silicone |

| | | Days | | | | |
| --- | --- | --- | --- | --- | --- | --- |
| | | 1 | 7 | 14 | 21 | 28 |
| Undercoat: | | | | | | |
| Uncoated | 25% | 77 | 65 | 67 | 45 | 72 |
| | 50% | 24 | 44 | 36 | 37 | 39 |
| | 75% | 20 | 18 | 19 | 20 | 17 |
| C5000:C2000 | 25% | 9 | 20 | 22 | 28 | 21 |
| | 50% | 7 | 11 | 15 | 12 | 18 |
| | 75% | 4 | 9 | 10 | 10 | 11 |

Similar tests were run on un-undercoated samples and on samples precoated with various hydrocarbon and hydrocarbon-type materials at the following coating weights (in pounds per ream): PBD, 0.47; SBS, 0.52; C5000, 0.34; NRL, 0.51; and low density polyethylene ("LDPE"), 0.45. The results confirmed that undercoating layers made of materials having low modulus of elasticity provide release sheets with enhanced aged-release characteristics.

EP 0 302 207 A2

Table V

Substrate:        J. Mass

Release Coat:     RC450

| Undercoat: | 1 | 7 | 14 | 21 | 28 |
|---|---|---|---|---|---|
| | | | Days | | |
| Uncoated | 74 | 166 | 220 | 244 | 254 |
| PBD | 6 | 15 | 28 | 37 | 50 |
| SBS | 11 | 22 | 49 | 74 | 65 . |
| C5000 | 4 | 10 | 11 | 15 | 16 |
| NRL | 9 | 22 | 44 | 58 | 79 |
| LDPE | 24 | 48 | 50 | 62 | 89 |

MODULUS=15,000

The present disclosure is intended to be illustrative rather than restrictive. The scope of the invention patented is to be limited only by the express language of the following claims.

**Claims**

1. A release sheet comprising a cellulosic and/or polymeric substrate layer, a nonpolar undercoating layer characterized by low modulus of elasticity bonded to said substrate layer, and a silicone release layer bonded to said undercoating layer.

2. A release sheet according to claim 1 wherein said undercoating layer has a polar component of surface energy of less than 5 dynes and a modulus of elasticity of less than 10,000 psi.

3. A release sheet according to claim 2 wherein the modulus of elasticity of the undercoating layer is less than 3000 psi.

4. A release sheet according to claim 2 wherein the modulus of elasticity of the undercoating layer is less than 500 psi.

5. A release sheet according to claim 2 wherein said undercoating layer comprises polybutadiene, polyisoprene, styrene butadiene rubber, styrene isoprene rubber, styrene-butadiene-styrene, styrene-isoprene-styrene, styrene-ethylene-butylene-styrene, styrene-ethylene-propylene-styrene, or polybutadiene diacrylate.

6. A release sheet according to claim 3 wherein said substrate layer is paper or extrusion-coated paper, said undercoating layer is polybutadiene, polyisoprene, styrene-butadiene-styrene block copolymer, or is polybutadiene diacrylate optionally blended with $C_{14}$-$C_{15}$ diacrylates, and said release layer is a radiation-cured or addition-cured silicone.

7. A release sheet according to claim 4 wherein said substrate layer is supercalendered kraft paper, said undercoating is polybutadiene, and said release layer is a radiation-cured silicone.

8. A release sheet according to claim 4 wherein said substrate layer is supercalendered kraft paper, said undercoating layer is polybutadiene, and said release layer is a thermally-cured silicone.

9. A release sheet according to claim 1 wherein one side only of said substrate layer has bonded thereto said undercoating layer/release layer subsystem.

10. A release sheet according to claim 1 wherein one side of said substrate layer has bonded thereto an undercoating layer/release layer subsystem as defined in claim 1 and the other side of said substrate layer has bonded thereto a different undercoating layer/release layer subsystem.

7

11. A method for masking an adhesive zone of an adhesive-coated article which comprises adhering to said adhesive zone a release sheet according to any of claims 1 to 10.